# EUROPÄISCHE PATENTANMELDUNG

(11) **EP 1 442 918 A2**
(43) Veröffentlichungstag der Anmeldung: **04.08.2004**
(21) Anmeldenummer: 03103888.8
(22) Anmeldetag: 21.10.2003
(51) Int. Cl.: B60K 35/00, B60K 31/00, B60K 28/06

(54) **Verfahren zur Anzeige fahrzeugspezifischer Informationssignale**

(30) Priorität: 31.01.2003 DE 10303792
(71) Anmelder: ROBERT BOSCH GMBH, 70442 Stuttgart (DE)
(72) Erfinder: Benzler, Ulrich-Lorenz, 30855, Langenhagen (DE); Placke, Lars, 30163, Hannover (DE)

(57) **Zusammenfassung**

Die Erfindung betrifft ein Verfahren zur Anzeige fahrzeugspezifischer Informationen.

Um mit relativ geringem Aufwand eine für den Benutzer verständliche Darstellung fahrzeugspezifischer Informationssignale bzw. fahrzeugspezifischer Informationen und Daten zu erreichen, wird vorgeschlagen, dass die fahrzeugspezifischen Informationen in einer dreidimensionalen Darstellung auf einer fahrzeugeigenen Anzeigeeinrichtung (2) angezeigt werden.

Hierbei können insbesondere dreidimensionale Interaktionen und/oder Animationen gestartet werden.

## Beschreibung

Die Erfindung betrifft ein Verfahren zur Anzeige fahrzeugspezifischer Informationssiginale.

Fahrzeugspezifische Informationen, wie z. B. Bedienungsanleitungen oder Benutzerinformationen für das Kraftfahrzeug oder für Teile oder Zusatzausstattungen des Kraftfahrzeuges, werden dem Benutzer im Allgemeinen in Handbüchern oder Prospekten angeboten; weiterhin können sie z.T. auch auf einem zweidimensionalen Anzeigefeld einer Anzeigeeinrichtung des Kraftfahrzeuges, z. B. einem Display im Dashboard des Fahrzeuges, abgerufen werden.

Derartige Darstellungen sind jedoch im Allgemeinen für den nicht fachkundigen Benutzer schwer verständlich, nicht selbsterklärend und vermitteln einen trockenen Eindruck. Für den Benutzer ist insbesondere das Auswählen der erforderlichen Informationen aus der Vielzahl der angebotenen Informationen schwierig. Hierbei muss der Benutzer z. B. oftmals eine Auswahl aus angebotenen Bezeichnungen treffen, ohne diesen Bezeichnungen Teile des Kraftfahrzeuges zuordnen zu können. Diese Darstellungen führen somit oftmals dazu, dass die angebotenen Informationen nicht aufgenommen und umgesetzt werden können, wodurch die zur Verfügung stehenden Funktionalitäten des Kraftfahrzeuges und seiner Einrichtungen nicht vollständig wahrgenommen und Fehler und Gefahren bei der Benutzung des Kraftfahrzeuges oder der kraftfahrzeuginternen Einrichtungen auftreten können, die erst bei einer späteren Werkstattinspektion behoben werden und ggf. zu zusätzlichen Fehlfunktionen und Schäden führen können.

Weiterhin ist für den Fahrer das Auslesen der Informationen während der Fahrt aufgrund der erforderlichen Aufmerksamkeit schwierig und zum Teil gefährlich. Das Nachlesen von Informationen in Benutzerhandbüchern oder der Anzeigeeinrichtung im Dashboardbereich ist während der Fahrt oftmals nur durch einen Beifahrer möglich, wenn die angezeigten Informationen zu komplex sind und erst vom Benutzer interpretiert werden müssen.

Das erfindungsgemäße Verfahren nach Anspruch 1 bietet demgegenüber insbesondere den Vorteil, dass eine verständlichere Wiedergabe der fahrzeugspezifischen Informationssignale bzw. fahrzeugspezifischen Informationen und Daten ermöglicht wird. Der Benutzer kann durch die optisch eingängigeren dreidimensionalen Darstellungen insbesondere des Kraftfahrzeuges selbst oder einzelner Bereiche oder Teile des Kraftfahrzeuges in relativ kurzer Zeit die angebotenen Informationen ohne Hinzuziehung allzu vieler Zusatzinformationen wahrnehmen, hierbei Funktionalitäten erkennen und ggf. Fehlersignale oder Warnsignale bemerken.

Hierbei können auf der Anzeigeeinrichtung insbesondere dreidimensionale Animationen, d. h. zeitlich veränderbare Darstellungen, ausgegeben werden. Bei derartigen Animationen können zum einen Warnhinweise, z. B. durch sich bewegende Pfeile und zeitlich veränderliche Darstellungen von Teilen, z. B. durch Blinken, Aufleuchten, periodisches Vergrößern und Verkleinern relevanter Teile, eingängig dargestellt werden. Weiterhin können das Kraftfahrzeug oder Teile des Kraftfahrzeuges gedreht und/oder vergrößert werden, so dass dem Benutzer in leicht verständlicher, eingängiger Weise sowohl der Aufbau als auch die Position und Ausrichtung relevanter Teile vermittelt wird, ohne hierzu in erheblichem Umfang weitere Informationen auswählen zu müssen. Die dreidimensionalen Animationen können insbesondere auch durch eine einen fortlaufenden Bewegungsablauf bildende Bildfolge, d. h. wie eine Videosequenz, dargestellt werden.

Weiterhin können vorteilhafterweise auch dreidimensionale Interaktionen durch den Benutzer gestartet werden. Bei Interaktionen werden von dem Benutzer fortlaufend oder zeitweise zusätzliche Eingabesignale eingegeben, um die dargestellten Informationen zu beeinflussen. Hierdurch kann z. B. ein dreidimensionales Navigieren durch das Kraftfahrzeug oder Teile des Kraftfahrzeuges ermöglicht werden, und/oder vom Benutzer relevante Teile des Kraftfahrzeuges ausgewählt, vergrößert oder gedreht werden und hierzu weitere Informationen, z. B. Detaillangaben, mögliche Fehlerquellen usw. abgerufen werden.

Relevante Teile des Kraftfahrzeuges können sowohl die vom Fahrer direkt beeinflussbaren Bedienungseinrichtungen, wie z. B. Radio, Infotainment-Einrichtung, Klimaanlage, sowie für das Fahrverhalten relevante Teile des Kraftfahrzeuges, wie z. B. die Lenkung, Bremsung, sowie der Motor sein, bei denen der Benutzer mögliche Fehlerinformationen, Verschleißangaben usw. abrufen kann. Durch die vom Fahrer eingegebenen Eingabesignale können auch Fahrzeugkomponenten, z. B. Sitze, eingestellt werden.

Als Warnsignale sowie Servicesignale können insbesondere von einem fahrzeuginternen System ermittelte Fehler oder Probleme, z. B. erhöhte Kühlwassertemperatur, Kühlwasserverlust, niedriger Öldruck, Ölstand, Tankfüllungsgrad, überhöhte Geschwindigkeit, instabiler Fahrzustand, sowie eine Kontrolle bzw. Anzeige verschiedener Wechselzyklen, z. B. von Öl, Bremsflüssigkeit, Getriebeflüssigkeit, dreidimensional angezeigt werden. Diese Signale, insbesondere über Ölstand, Kühlwasser, Scheibenwaschwasser und Reifendruck, können bei Kontrollen durch den Fahrer, d.h. auf Eingabesignale des Fahrers hin, ausgegeben werden. Weiterhin können sie selbsttätig bei Ermittlung eines Fehlerzustandes ausgegeben werden.

Die dreidimensionale Anzeige erfolgt vorteilhafter Weise durch eine Fluchtpunktdarstellung mit endlichem oder unendlichem Fluchtpunkt, d. h. insbesondere als perspektivische Darstellung. Die dreidimensionalen Darstellungen können mit Audiosignalen kombiniert werden.

Erfindungsgemäß können weiterhin abgestufte Zugriffsebenen bzw. Zugriffsmöglichkeiten und/oder abgestufte Darstellungsebenen eingerichtet sein. Der jeweils angebotene Zugriff und/oder die angebotene Darstellung können insbesondere von der Fahrsituation inklusive fahrzeuginternen Parametern, z. B. Geschwindigkeit, Beschleunigung, Einschaltzustand eines Lichtes, insbesondere Abblendlichts, eingestellter Audiobelastung usw., oder von dem Fahrerzustand abhängen. Bei einer Abhängigkeit von der Fahrsituation können z. B. komplexere Funktionen und Darstellungen, die eine erhöhte Benutzeraufmerksamkeit erfordern, z. B. Animationen und/oder Interaktionen oder eine aufwendige Fehlersuche oder Ölstandswarnung, nur bei ruhendem Fahrzeug aufgerufen bzw. gestartet werden und einfachere Funktionen und Darstellungen, z. B. eine Bedienung des Radios oder der Sitzeinstellung, auch während der Fahrt oder in Abhängigkeit von Fahrerbelastung/Geschwindigkeit ausgegeben werden. Bei einer Abhängigkeit der Zugriffsebenen oder Darstellungsebenen vom Fahrerzustand kann dieser z. B. mittels eines Sensors oder aus seinem Fahrverhalten ermittelt werden, wobei die höheren Ebenen nur zugelassen werden, wenn entschieden wird, dass der Fahrerzustand dies zulässt.

Das erfindungsgemäße Verfahren kann insbesondere auch die Darstellung eines rückwärtigen Fahrraums durch eine dreidimensionale Darstellung auf der Anzeigeeinrichtung umfassen. Hierbei kann z. B. aus einem mittels eines Abstandssensors ermittelten Abstand zu einem rückwärtigen Hindernis ein dreidimensionaler rückwärtiger Fahrraum nachgebildet und auf der Anzeigeeinrichtung als dreidimensionale Darstellung angezeigt werden, ohne dass hierzu Kameras zur Aufnahme des rückwärtigen Fahrraums vorgesehen sind. Hierbei kann das erfindungsgemäße Verfahren in Kombination mit einem oder als Teil eines Parkassistentsystems bzw. Automatic Cruise Control (ACC)-Systems oder einer Einparkhilfe, durchgeführt werden.

Als Anzeigeeinrichtung kann ein Display bzw. Bildschirm des Fahrerinformationssystems, ein Computermonitor, eine Kombiinstrument-Anzeige sowie - insbesondere bei Benutzung im Stand - auch ein PDA oder Laptop verwendet werden.

Durch die erfindungsgemäße dreidimensionale Darstellung, insbesondere in Verbindung mit Animationen und/oder Benutzer-Interaktionen, wird ein erhöhter Wiedererkennungseffekt bzw. eine erhöhte Merkbarkeit sowie ein besseres Verständnis der dargestellten Informationen erzielt. Weiterhin sind neue Funktionalitäten einschließlich der Ausgabe von Warnmeldungen sowie eine Anleitung zur Fehlerbehebung möglich. Die Visualisierung ist eindeutiger als bei zweidimensionalen Darstellungen, wobei eine erhöhte Benutzerfreundlichkeit bzw. ein besseres Human-Machine-Interface (HMI) in einer innovativen, technik-begeisternden Form erreicht wird. Die Darstellung der Informationen erfolgt in einem realen dreidimensionalen Kontext mit Darstellung der jeweiligen Teile und Bedienelemente in ihrer Position im Fahrzeug.

Die Erfindung wird im Folgenden anhand der beiliegenden Zeichnungen an einigen Ausführungsformen näher erläutert. Es zeigen:
- Fig. 1 -: einen Ausschnitt aus einem Fahrzeug-Dashboard mit Anzeigeeinrichtung;
- Fig. 2 -: ein Blockdiagramm eines fahrzeuginternen Steuersystems zur Durchführung des Verfahrens;
- Fig. 3 -: eine Straßenanordnung mit einem Fahrzeug mit Parkassistentsystem;

Ein Dashboard 1 eines Kraftfahrzeuges weist eine Anzeigeeinrichtung 2, z. B. ein LCD-Display, LED-Display oder beleuchtetes Display, zur Darstellung von Objekten 3 mit Teilobjekten 4, außerhalb der Anzeigeeinrichtung 2 vorgesehene Eingabeeinrichtungen 5 und als Teil der Anzeigeeinrichtung 2 ausgebildete Eingabeeinrichtungen 6 auf. Die Eingabeeinrichtungen 5 können z. B. Drehschalter oder Taster sein; die alternativ oder zusätzlich hierzu vorgesehenen Eingabeeinrichtungen 6 können z. B. bei Verwendung eines Touch-Screens ausgebildet sein. Weiterhin ist die Verwendung von Trackball-Systemen oder Maus-Systemen als Eingabeeinrichtung möglich, wozu als Anzeigeeinrichtung 2 vorteilhafterweise ein getrennt vom Dashboard 1 vorgesehener Monitor, z. B. als Teil eines PDAs oder Laptops, verwendet wird. Als Objekte 3 können auf der Anzeigeeinrichtung 2 z. B. das gesamte Fahrzeug und als Teilobjekte 4 z. B. Teilbereiche des Fahrzeugs angezeigt werden. Hierbei kann das ganze Objekt 3 oder die Teilobjekte 4 jeweils zur Darstellung von Animationen und/oder Interaktionen aktiviert werden.

Über die Eingabeeinrichtungen 5, 6 werden vom Benutzer Eingabesignale S1 an eine Steuereinrichtung 7 - z. B. die Steuereinrichtung des Fahrzeug-Navigationssystems bzw. Fahrerinformationssystems - eingegeben. Die Steuereinrichtung 7 entnimmt Datensignale S2 aus einem Datenspeicher 8 und gibt Informationssignale S3 zur Darstellung der Objekte 3 und ggf. Teilobjekte 4 auf der Anzeigeeinrichtung 2 aus. Die Steuereinrichtung 7 kann hierbei auch über einen fahrzeuginternen Bus 9, z. B. einen CAN-Bus 9, Datensignale S4, insbesondere Fahrsituationssignale S4 und/oder Fahrerzustandssignale S4, aufnehmen. Die Fahrsituationssignale können sich auch auf fahrzeuginterne Parametern, z. B. Geschwindigkeit, Beschleunigung, die Bremsbetätigung, Lichteinstellung, Audiobelastung usw. beziehen.

Die Komplexität der Darstellung der Objekte 3 erfolgt auf verschiedenen Darstellungs- und Funktionsebenen in Abhängigkeit von Datensignalen S4, wobei bei stehendem Fahrzeug eine höheren Ebene mit höherer Komplexität als während des Fahrbetriebes zugelassen ist. Der Fahrer kann über die Eingabeeinrichtungen 5, 6 Teilobjekte 4 auswählen, aktivieren und hierdurch Animationen, z. B. Drehbewegungen oder Reparaturanleitungen, und/oder Interaktionen, wie z. B. ein Navigationsverfahren durch das Fahrzeug zu einzelnen Fahrzeugteilen, starten. Ergänzend zur optischen Ausgabe auf der Anzeigeeinrichtung 2 kann auch eine akustische Ausgabe erfolgen.

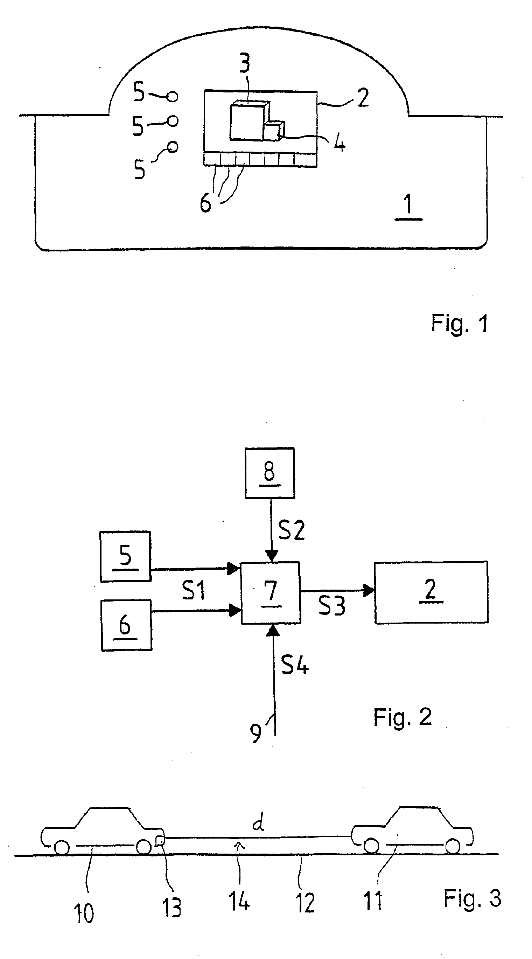

Gemäß Fig. 3 können erfindungsgemäß als Teil eines Parkassistentsystems rückwärtige Abstände d eines Fahrzeugs 10 zu anderen Verkehrsobjekten, z. B. einem anderen Fahrzeug 11 auf einer Straße 12, durch einen Abstandssensor 13 auf Basis von Ultraschall, Radar oder Infrarot ermittelt und als Signal S4 übertragen werden, woraus ein rückwärtiger dreidimensionaler Fahrraum 14 berechnet, nachgebildet und auf der Anzeigeeinrichtung 2 als Objekt 3 dargestellt werden kann.

## Patentansprüche

1. Verfahren zur Anzeige fahrzeugspezifischer Informationssignale (S3), bei dem die fahrzeugspezifischen Informationssignale (S3) in einer dreidimensionalen Darstellung auf einer fahrzeugeigenen Anzeigeeinrichtung (2) angezeigt werden.

2. Verfahren nach Anspruch 1, **dadurch gekennzeichnet, dass** die fahrzeugspezifischen Informationssignale (S3) auf der Anzeigeeinrichtung (2) in einer Fluchtpunktdarstellung mit endlichem oder unendlichem Fluchtpunkt angezeigt werden.

3. Verfahren nach Anspruch 1 oder 2, **dadurch gekennzeichnet, dass** durch ein Eingabesignal (S1) eines Benutzers eine dreidimensionale Interaktion mit Ausgabe von dreidimensionalen Darstellungen auf der fahrzeugeigenen Anzeigeeinrichtung (2) gestartet wird.

4. Verfahren nach Anspruch 3, **dadurch gekennzeichnet, dass** bei der dreidimensionalen Interaktion eine freie Navigierbarkeit in einer dreidimensionalen Darstellung des Fahrzeugs (10) oder eines Teilbereichs des Fahrzeugs aufrufbar ist.

5. Verfahren nach einem der vorherigen Ansprüche, **dadurch gekennzeichnet, dass** durch ein Eingabesignal (S1) eines Benutzers auf der fahrzeugeigenen Anzeigeeinrichtung (2) eine zeitlich veränderliche A-nimation mit dreidimensionalen Darstellungen gestartet wird.

6. Verfahren nach einem der vorherigen Ansprüche, **dadurch gekennzeichnet, dass** ein Abstand (d) des Fahrzeuges (10) zu einem oder mehreren Objekten (11) in einem rückwärtigen Fahrbereich (14) des Fahrzeuges (10) ermittelt wird und aus dem ermittelten Abstand eine dreidimensionale Darstellung des rückwärtigen Fahrbereichs (14) des Kraftfahrzeuges (10) ermittelt und auf der Anzeigeeinrichtung (2) ausgegeben wird.

7. Verfahren nach Anspruch 6, **dadurch gekennzeichnet, dass** es ein Einparkhilfeverfahren, Parkassistentverfahren, ACC oder Teil eines Einparkhilfeverfahrens, Parkassistentverfahrens oder ACC ist.

8. Verfahren nach einem der vorherigen Ansprüche, **dadurch gekennzeichnet, dass** in Abhängigkeit von fahrzeuginternen Datensignalen (S4) abgestufte fahrzeugspezifische Informationssignale (S3) auf der Anzeigeeinrichtung (2) aufrufbar sind.

9. Verfahren nach Anspruch 8, **dadurch gekennzeichnet, dass** die fahrzeuginternen Datensignale (S4) Fahrerzustandsignale und/oder Fahrsituationssignale, z. B. Geschwindigkeitssignale, Beschleunigungssignale, Bremsbetätigungssignale, Lichteinstellungssignale und/oder Audiobelastungssignale sind.

10. Verfahren nach Anspruch 8 oder 9, **dadurch gekennzeichnet, dass** während der Fahrt nur Grundfunktionen und im Stand Zusatzfunktionen, z. B. Animationen und/oder Interaktionen, aufrufbar sind.

11. Verfahren nach einem der Ansprüche 8 bis 10, **dadurch gekennzeichnet, dass** die abgestuften fahrzeugspezifischen Informationssignale (S3) auf der Anzeigeeinrichtung (2) abgestufte Zugriffsebenen und/oder abgestufte Darstellungsebenen wiedergeben.

12. Verfahren nach einem der vorherigen Ansprüche, **dadurch gekennzeichnet, dass** die fahrzeugspezifischen Informationssignale (S3) Bedienungsanleitungen für das Fahrzeug (10) oder Teile des Fahrzeuges und/oder Benutzerinformationen für das Fahrzeug oder Teile des Fahrzeuges und/oder Warnsignal, Fahrzustands-Informationssignale, z. B. die Fahrzeuggeschwindigkeit, und/oder Service-Informationssignale, z. B. ein Tankfüllungssignal, Ölkontrollwechselsignal oder Sitzeinstellungssignal, enthalten.
